# EUROPEAN PATENT SPECIFICATION

(11) **EP 3 877 642 B1**
(45) Date of publication and mention of the grant of the patent: **19.10.2022**
(21) Application number: 18800920.3
(22) Date of filing: 09.11.2018
(51) Int. Cl.: F02M 21/06, F02D 19/06, F02M 21/02, F02B 29/04, F02D 19/10

(54) **A GAS ENGINE POWER PLANT AND METHOD OF OPERATING A GAS ENGINE POWER PLANT**
GASTURBINENKRAFTWERK UND VERFAHREN ZUM BETREIBEN EINES GASTURBINENKRAFTWERKS
CENTRALE ÉLECTRIQUE À MOTEUR À GAZ ET PROCÉDÉ D'EXPLOITATION D'UNE CENTRALE ÉLECTRIQUE À MOTEUR À GAZ

(43) Date of publication of application: 15.09.2021
(73) Proprietor: Wärtsilä Finland Oy, 65100 Vaasa (FI)
(72) Inventor: HALONEN, Ville, 65380 Vaasa (FI); WIDJESKOG, Klaus, 65380 Vaasa (FI); HÖGNABBA, Tomas, 65380 Vaasa (FI)
(74) Representative: Genip Oy
(86) International application number: PCT/EP2018/080758
(87) International publication number: WO 2020/094237

(56) References cited:
- CN-B- 103 953 457
- KR-A- 20100 015 102
- US-A1- 2008 299 848
- US-A1- 2016 108 857
- Wärtsilä: "Wärtsilä 31DF PRODUCT GUIDE", , March 2019 (2019-03), XP055598947, Retrieved from the Internet: URL:https://cdn.wartsila.com/docs/default- source/product-files/engines/df-engine/pro duct-guide-o-e-w31df.pdf?sfvrsn=96a9145_12 [retrieved on 2019-06-24]

## Description

### Technical field

The present invention relates to a gas engine power plant according to the preamble of claim 1. The invention relates also to method of operating a power plant according to the preamble of an independent method claim.

### Background art

It is well known in the art of internal combustion piston engines that a considerable part of the energy contained in the fuel combusted in the engine cannot be efficiently utilized in practise. A portion of the energy in the fuel is transformed into mechanical work is only about 50% while the remaining energy is dissipated into heat. Due to the constructional and operational reasons the engine itself is provided with a cooling system in which a cooling fluid, such as a water based solution is arranged to receive excessive heat from the engine and to transfer the heat to consumers or to dump the heat to the environment.

On the other hand the use of LNG (Liquefied Natural Gas) as fuel for marine applications is increasing since it is an efficient way of cutting emissions. All major emissions can be significantly reduced to truly form an environmentally sound solution; the reduction in CO₂, in particular, is difficult to achieve with conventional oil-based fuels. The burning process of NG is clean. Its high hydrogen-to-coal ratio (the highest among the fossil fuels) means lower CO₂ emissions compared with oil-based fuels. When NG is liquefied, all sulphur is removed, which means zero SOx emissions. The clean burning properties of NG also significantly reduce NOx and particle emissions compared with oil-based fuels. Particularly in cruise vessels, ferries and so called ro-pax vessels, where passengers are on board, the absence of soot emissions and visible smoke in the exhaust gases of ship's engines is a very important feature.

The most feasible way of storing NG in ships is in liquid form. In existing ship installations, LNG is stored in cylindrical, heat insulated single- or double-walled, stainless steel tanks. The tank pressure is defined by the requirement of the engines burning the gas and is usually less than 5 bar. A higher (typically 9 bar) tank design pressure is selected due to the natural boil-off phenomenon.

Document US 2016/108857 A1 relates to improving volumetric efficiency of an internal combustion engine. It discloses a main gas evaporator which utilized waste heat of the engine for evaporating LNG for use in the engine.

Document US 2008/299848 A1 discloses an arrangement for evaporating liquefied gaseous fuel using the heat of a HVAC system of a marine vessel.

Document KR 2010 0015102 A discloses an arrangement in which liquefied gaseous fuel is evaporated by utilizing heat of an exhaust gas of an internal combustion engine.

A dual fuel internal combustion engines are known as such which are designed for continuous operation in gas operating mode or diesel operating mode. Wärtsilä 31 DF Product guide, ^{©} Copyright by WÄRTSILÄ FINLAND Oy, which in a form as it was downloadable on the date of filing this patent application at URL adress https://cdn.wartsila.com/docs/default-source/product-files/engines/df-engine/product-guide-o-e-w31df.pdf, discloses a dual fuel engine. The Wärtsilä 31DF engine comprises a cooling water system which comprises a high temperature circuit (HT-water) and a low temperature circuit (LT-water). The high temperature circuit is arranged to receive heat from the engine at higher temperature level than the low temperature circuit. Thus, the high and low temperature circuits are arranged to cool down parts of the engines according to their temperature level, respectively. For engines operating in normal conditions the HT-water is cooling the cylinders (jacket) and the first stage of the low pressure 2-stage charge air cooler. The LT-water is cooling the lubricating oil cooler, the second stage of the low pressure 2-stage charge air cooler and the high pressure 1-stage charge air cooler. For engines operating in cold conditions the HT-water is cooling the cylinders (Jacket). A HT-water pump is circulating the cooling water in the circuit and a thermostatic valve mounted in the internal cooling water system, controls the outlet temperature of the circuit. The LT-circuit is cooling the Lubricating Oil Cooler (LOC), the second stage of the Low Pressure 2-stage charge air cooler, the High Pressure 1-stage charge air cooler and the first stage of the low pressure 2-stage charge air cooler. An LT-thermostatic valve mounted in the external cooling water system, controls the inlet temperature to the engine for achieving correct receiver temperature. The cooling water system comprises a central cooler which is arranged receive any excessive heat and in marine solutions transfer the excessive heat to the sea. There is also disclosed that an evaporator unit is provided with HT-circuit to receive heat from the water coming from the engine as well as upstream the central cooler. The product guide refers to an onboard evaporator for producing water.

There is an ongoing aim of increasing the overall efficiency of a dual fuel engine, particularly its gas mode operation. Thus, it is an object of the invention to provide a gas engine power plant and method of operating a gas engine power plant in which the performance is considerably improved compared to the prior art solutions.

### Disclosure of the Invention

Objects of the invention can be met substantially as is disclosed in the independent claims and in the other claims describing more details of different embodiments of the invention.

According to an embodiment of the invention a gas engine power plant comprising at least one dual fuel internal combustion engine configured to run by burning gas fuel, a cryogenic fuel storage for storing gas fuel in liquefied form for use of the engine, a fuel feed line between the cryogenic fuel storage and the at least one dual fuel internal combustion engine, a main gas evaporator arranged to the fuel feed line and configured to evaporate the liquefied gas for use by the at least one dual fuel internal combustion engine, a heat transfer circuit configured to circulate heat transfer fluid in the circuit for transferring heat from the at least one dual fuel engine to heat transfer fluid, a central heat transfer fluid cooler system arranged to the heat transfer circuit. The main gas evaporator is arranged into heat transfer communication with the heat transfer circuit after the central fluid cooler system in the flow direction of the heat transfer fluid such that heat transfer fluid temperature entering the main gas evaporator is controllable by the central cooler system.

This provides an improved manner of operating a gas engine power plant which utilizes the heat available from the engine(s) in more efficient manner. Specifically this ensures that the heat transfer fluid temperature for the main gas evaporator can be kept within a desired range.

According to an embodiment of the invention the main gas evaporator is arranged to the heat transfer circuit after the central fluid cooler system in the flow direction of the heat transfer fluid.

According to an embodiment of the invention the circuit is provided with a channel parallel with and bypassing the main gas evaporator.

According to an embodiment of the invention the circuit is provided with a pump arranged between branching locations of the channel parallel with the main gas evaporator.

According to an embodiment of the invention a central heat transfer fluid cooler system comprises a central cooler and a first bypass channel configured to bypass the central cooler from its upstream side to its downstream side and a flow control valve configured to control the flow of heat transfer fluid through the first bypass channel and the central cooler.

According to an embodiment of the invention the central heat transfer fluid cooler system comprises a valve actuator system arranged to operate the flow control valve, the actuator system comprising a temperature probe in connection with the heat transfer circuit at the downstream side of the central cooler, the actuator being configured to operate based on temperature information obtainable from the temperature probe.

According to an embodiment of the invention the central cooler is arranged in heat transfer communication with the sea water to transfer all unusable heat to the sea.

Method of operating a gas engine power plant comprises operating at least one dual fuel internal combustion engine by burning gas fuel, storing the gas fuel in a cryogenic fuel storage in liquefied form, feeding gas to the at least one dual fuel internal combustion engine via a fuel line from the cryogenic fuel storage, evaporating the liquefied gas for use by the at least one dual fuel internal combustion engine by transferring heat in a main gas evaporator in the fuel line, transferring heat from the engine to heat transfer fluid circulating in a heat transfer circuit and transferring heat from the heat transfer fluid to at least a central heat transfer fluid cooler system, and further transferring heat from the heat transfer fluid to the main gas evaporator after the central fluid cooler system and controlling the heat transfer in the central heat transfer cooling system so as to maintain the temperature of the heat transfer fluid entering the main gas evaporator at downstream side to the central fluid cooler within a predetermined range.

According to an embodiment of the invention the heat transfer in the central heat transfer cooling system is controlled by a temperature of the heat transfer fluid measured at location after transferring heat from the heat transfer fluid to the main gas evaporator.

According to an embodiment of the invention a portion of the heat transfer fluid is arranged to continuously bypass the main gas evaporator.

According to an embodiment of the invention the heat is transferred directly from the heat transfer fluid to the evaporating gas.

According to an embodiment of the invention the heat is transferred indirectly from the heat transfer fluid to the evaporating gas.

According to an embodiment of the invention the power plant provides power to a marine vessel and the central cooler is cooled by transferring heat to the sea water.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

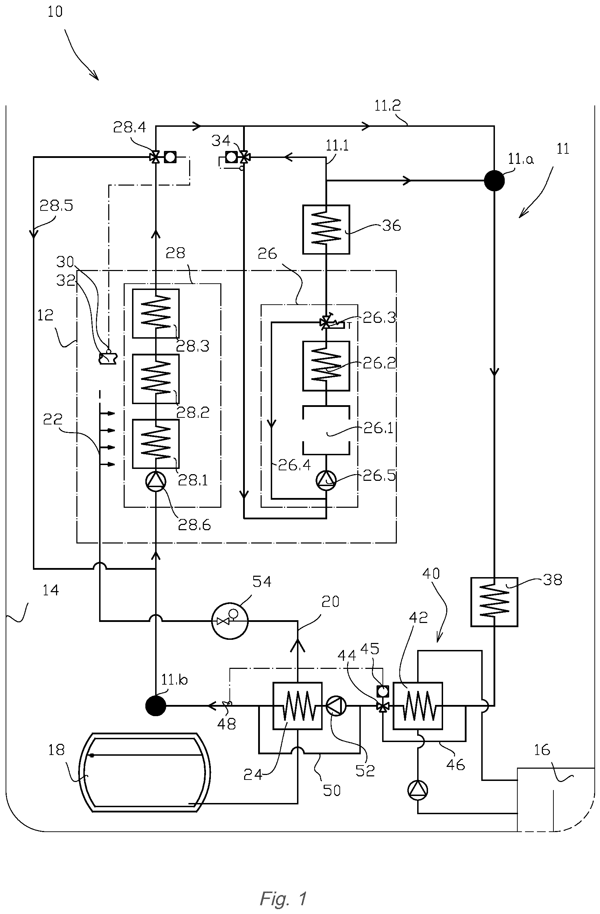

In the following, the invention will be described with reference to the accompanying exemplary, schematic drawing, in which
Figure 1 illustrates a power plant according to an embodiment of the invention.

### Detailed Description of Drawings

Figure 1 depicts schematically a gas engine power plant 10, which comprises at least one dual fuel internal combustion engine 12, referred to as an engine in the following. Dual-fuel engine is a piston engine that can run on both gaseous and liquid fuels. When running in gas mode, the engine works according to the Otto process where the lean air-fuel mixture is used for combustion. When running in diesel mode, the engine works according to the Diesel process. The engine is optimised for running on gaseous fuels and diesel fuel is used for backup fuel operation. Switching between fuels can take place seamlessly during operation, without loss of power or speed. In the figure 1 the power plant 10 is in a marine vessel 14 for producing propulsion and/or electric power to the vessel 14. The vessel is provided with a sea chest 16 providing sea water for cooling purposes in the vessel 14. The power plant 10 comprises a cryogenic fuel storage, a cryogenic tank 18 which is configured to store gas fuel, such as liquefied natural gas, in liquefied form for use in the engine 12. In the figure 1 only a fuel feed line 20 is shown schematically to demonstrate that the power plant comprises necessary equipment, such as a gas valve unit 54 for each engine, to use liquefied gas as a gas fuel for the engine 12. Even if not shown the tank 18 is provided with means for maintaining desired pressure in the tank so that the fuel feed line 20 does not necessarily need a fuel pump. The tank is also provided with means for using boil off gas generated in the tank preferably as a fuel of the engine. The fuel feed line 20 leads from the tank 18 to the engine 12. The engine 12 is provided with gaseous fuel admission system 22 to with the fuel feed line 20 is connected to. The fuel admission system 22 is arranged for controllable feeding gaseous fuel to engine to be burned in the cylinders thereof. The fuel feed line 20 is provided with a main gas evaporator 24 which is configured to evaporate the liquefied gas into gaseous form to meet the demand of and for use by the at least one dual fuel internal combustion engine 12.

The power plant 10 is provided with a heat transfer circuit 11 into which the engine 12 is connected. The heat transfer circuit 11 is configured to circulate heat transfer fluid in the circuit 11 for transferring heat from the at least one dual fuel engine 12 to heat transfer fluid flowing in the circuit 11, and further from the heat transfer fluid to heat consumers and to the sea water, if so desired. While the engine 12 is running and the gas fuel is burned in the engine it produces heat which needs to be removed from the engine. In order to maintain the temperatures at different parts of the engine 12 at desired ranges, the engine is provided with two heat transfer circuit sections 26 and 28, a so called high temperature section 26 and a low temperature section 28 in which a heat transfer fluid, such as water, is arranged to flow, when the power plant is in use.

In the figure 1, which represents an exemplary type of an engine, the high temperature (HT) heat transfer circuit section 26 comprises a jacket cooler 26.1 which cools down the cylinders and cylinder heads of the engine. There is also a low pressure - high temperature (LP-HT) stage combustion air cooler 26.2 arranged such that the jacket cooler 26.1 is before the LP-HT stage combustion air cooler 26.2 in a flow direction of the heat transfer fluid, i.e. the coolers being connected in series. The LP-HT stage combustion air cooler relates to an engine provided with two stage turbo charger (not shown). The HT section 26 comprises further a heat transfer fluid recycle channel 26.4 which extends between a locations before the jacket cooler 26.1 in the flow direction of the heat transfer fluid and after of the LP-HT stage combustion air cooler 26.2. There is a circulation pump 26.5 arranged to the HT section 26 for circulating the heat transfer fluid in the HT section 26. Additionally there is a thermostatic valve 26.3 arranged to the HT section 26 after the LP-HT stage combustion air cooler 26.2 in the flow direction of the heat transfer fluid, which is connected to the recycle channel 26.4 for maintaining a desired temperature in the engines jackets and the cylinder heads. The thermostatic valve 26.3 is integrated into the engine 12 being advantageously a wax element thermostatic control valve.

The low temperature (LT) heat transfer circuit section 28 in the figure 1 comprises a lubrication oil cooler 28.1, a low pressure - low temperature (LP-LT) stage combustion air cooler 28.2 and a high pressure (HP) combustion air cooler 28.3 connected in series in the flow direction of the heat transfer fluid. The LT heat transfer circuit section 28 comprises further a heat transfer fluid recycle channel 28.5 which extends between the locations before the lubrication oil cooler 28.1 and after the HP combustion air cooler 28.3 in the flow direction of the heat transfer fluid. There is a circulation pump 28.6 arranged to the HT section 26 for circulating the heat transfer fluid in the HT section 26. Additionally there is a first 3-way control valve 28.4 arranged to the HT section 26 after the HT stage combustion air cooler 28.3 connected to the recycle channel 28.5 for maintaining a desired temperature of the combustion air. The first control valve 28.4 is outside the engine 12. The first control valve 28.4 is provided with a valve actuator system arranged to operate the first control valve 28.4. The actuator system comprises a temperature probe 30 arranged in connection with an inlet air system of the engine, advantageously with an air receiver 32. The first control valve 28.4 may have a variable set point temperature dependent on e.g. engine load and operational mode of the engine (gas or diesel mode).

As can be seen in the figure 1, the low temperature section 28 and the high temperature section 26 are arranged in series with each other, notwithstanding possible pass or recycle conduits. When looking into the heat transfer circuit 11 in the flow direction of the heat transfer fluid, there is at least one high temperature heat recovery unit 36 arranged after the high temperature (HT) heat transfer circuit section 26 via which heat produced in the engine is obtainable at considerably high temperature, typically about 96°C. The heat transfer circuit 11 is provided with a second 3-way control valve 34 in the circuit 11 between the low temperature section 28 and the high temperature section 26, which is connected by a return channel 11.1 extending between the location after the heat recovery unit 36 of the circuit 11 and the control valve 34. The second control valve 34 is configured to control the temperature of the heat transfer fluid entering high temperature heat transfer circuit section 26 by making use of the fluid temperature measurement. The second control valve 34 set point is variable depending on the engine load. For example at diesel operation the set point can be from 79°C (100% engine load) to 89.5°C (50% engine load). The second control valve 34 controls the engine's HT-circuit inlet temperature. Typically approximately 10% of the HT circuit pump nominal capacity is recirculated back to the engine inlet as a sufficient control margin of the engine build-on wax element thermostatic control valve 26.3.

There is also a second bypass channel 11.2 arranged to extend from a location of the circuit 11 between the first control valve 28.4 and the second control valve 34 to a location after the high temperature heat recovery unit 36.

Additionally, there is at least one low temperature heat recovery unit 38 arranged after the junction point 11.a of the heat transfer circuit and the second bypass channel 11.2, after the high temperature (HT) heat transfer circuit section 26 in the flow direction of the heat transfer fluid. The heat transfer fluid flowing into the low temperature heat recovery unit 38 is a mixture of the fluid coming from the high temperature (HT) heat transfer circuit section 26 and the low temperature heat transfer circuit section 28. The low temperature heat recovery unit 38 operates at lower temperature than the high temperature heat recovery unit 36, typically about 65 - 85 °C, depending e.g. on the engine load, used mode of operation (gas vs. diesel) and the heat exchange power of the high temperature heat recovery unit 36..

The heat transfer circuit 11 is further provided with a central cooler system 40 for the heat transfer fluid arranged to the heat transfer circuit 11 after the at least one low temperature heat recovery unit 38 in the flow direction of the heat transfer fluid. The central cooler system 40 comprises a central cooler heat exchanger 42, which is arranged in heat transfer communication with the sea chest 16 - and thus also with the sea water - arranged to a hull of the marine vessel 14 in a manner known as such. As mentioned earlier the gas engine power plant 10 is provided with the main gas evaporator 24 which is configured to evaporate the liquefied gas into gaseous form for use by the at least one dual fuel internal combustion engine 12. The main gas evaporator 24 is arranged to the heat transfer circuit after the central cooler system 40 in the flow direction of the heat transfer fluid, which is indicated by the arrows in the circuit 11 in the figure 1. This way the heat produced by the engine 12, or several engines, is utilized for evaporating liquefied gas to be burned in the engine. The central cooler system in the figure 1 comprises a third flow control valve 44 and a first bypass channel 46 by means of which part of the heat transfer fluid can be arranged to bypass the central cooler 42. The first bypass channel 46 is arranged to extend from upstream side of the central cooler 42 to the downstream side of the central cooler 42. The first bypass channel is coupled with the third flow control valve 44 such that a first portion of the heat transfer fluid coming to the central cooler 42 is directed to flow through the central cooler 42 and cooled down therein, while a second portion is directed to flow through the bypass channel 46 after which the first and the second portions are mixed with each other prior to introduction into the main gas evaporator 24. The third flow control valve 44 is arranged downstream side of the central cooler 42 in a mixing configuration, which allows more stable process conditions. The third flow control valve 44 is provided with a valve actuator system 45 arranged to operate the first control valve 28.4. In the embodiment of the figure 1 the actuator system 45 comprises a temperature probe 48 arranged in connection with heat transfer circuit 11 at a location next after the main gas evaporator 24 in the flow direction of the heat transfer fluid by means of the position of the temperature probe 48 next downstream the main gas evaporator 24 it can be ensured that temperature of the heat transfer fluid fed to the engine is always at desired level, at about 40°C or at least less than 45°C. It is also important that the temperature of the heat transfer fluid entering to the main gas evaporator 24 is not excessively high, advantageously not more than 60°C. This is because it is advantageous that the temperature of the gas fuel fed to the engine 12 is not too hot, either. With this arrangement placing the main gas evaporator after the central cooler it is ensured that the heat transfer fluid temperature entering to the main gas evaporator is below the desired temperature in all operating conditions as the fluid is cooled in the central cooler prior to feeding it into main gas evaporator 24.

The temperature of the heat transfer fluid fed to the engine, more precisely to its LT heat transfer circuit section 28 and heat transfer power of the main gas evaporator 24 is controlled by the third flow control valve 44, with a closed loop feedback measurement point after the main gas evaporator. The temperature of the heat transfer fluid entering to MGE depends on the heat demand of the main gas evaporator which is dependent e.g. on the engine load, in turn.

These matters are taken into account in designing the gas engine power plant and particularly in setting the control strategy of the third control valve 44. The requirements for desired operation can be obtained with single point temperature measurement by proper design.

It is advantageous that steady flow conditions of the heat transfer fluid can be provided to both the engine 12 and the main gas evaporator 24. Typically the flow rate demand of the heat transfer fluid through the main gas evaporator 24 is approximately 25-30% of the capacity of the engine driven circulation pump 28.6 of the HT section 26. So, in order to avoid needlessly over-dimensioning the main gas evaporator 24 there is arranged a channel 50 parallel with the main gas evaporator 24. This way a portion of the heat transfer fluid may continuously by-pass the main gas evaporator 24.

The heat transfer circuit 11 is provided with an auxiliary pump 52 positioned at immediately upstream the main gas evaporator 24 which provides substantially steady flow of heat transfer fluid to the main gas evaporator 24 regardless of the fact that the flow in the circuit may be variable depending on e.g. the position, or closing percentage of the first control valve 28.4. The pump 52 is arranged between the branching locations of the channel 50 parallel with the main gas evaporator 24.

Should the gas engine power plant comprise more than one engine, the engines' heat transfer circuits are advantageously coupled parallel with each other to the locations 11.a (the junction point of the heat transfer circuit and the second bypass channel 11.2 downstream the high temperature (HT) heat transfer circuit section 26) and 11.b (a location in the heat transfer circuit 11 downstream the main gas evaporator 24 and the engine 12) in the figure 1.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A gas engine power plant (10) comprising
at least one dual fuel internal combustion engine (12) configured to run by burning gas fuel,
a cryogenic fuel storage (18) for storing gas fuel in liquefied form for use of the engine (12),
a fuel feed line (20) between the cryogenic fuel storage (18) and the at least one dual fuel internal combustion engine (12),
a heat transfer circuit (11) configured to circulate heat transfer fluid in the circuit for transferring heat from the at least one dual fuel engine (12) to the heat transfer fluid,
a main gas evaporator (24) arranged to the fuel feed line (20) and to the heat transfer circuit configured to evaporate the liquefied gas for use by the at least one dual fuel internal combustion engine (12), and
a central heat transfer fluid cooler system (40) arranged to the heat transfer circuit (11), **characterized in that**
the central cooler system (40) comprises a central cooler (42) for cooling the heat transfer fluid and a first by-pass channel (46), arranged to the heat transfer circuit (11), and a flow control valve (44) configured to control the flow of heat transfer fluid through the first by-pass channel (46) and the central cooler (42), and the central cooler system (40) comprises a valve actuator system (45) arranged to operate the flow control valve (44), and the valve actuator system (45) comprising a temperature probe (48) in connection with the heat transfer circuit at the downstream side of the main gas evaporator (24), the actuator being configured to operate based on temperature information obtainable from the temperature probe (48) and that the main gas evaporator (24) is arranged into heat transfer communication with the heat transfer circuit (11) after the central cooler (42) and the first by-pass channel (46) of the central cooler system (40) in the flow direction of the heat transfer fluid such that heat transfer fluid temperature entering the main gas evaporator (24) is controllable by the central cooler (42) and the first by-pass channel (46) of the central cooler system (40) based on temperature of the heat transfer fluid at a location next after the main gas evaporator (24) in the flow direction of the heat transfer fluid.

2. A gas engine power plant according to claim 1, **characterized in that** the circuit is provided with a channel (50) parallel with and bypassing the main gas evaporator (24).

3. A gas engine power plant according to claim 2, **characterized in that** the circuit (11) is provided with a pump (52) arranged between branching locations of the channel (50) parallel with the main gas evaporator (24).

4. A gas engine power plant according to claim 1 in a marine vessel, **characterized in that** the central cooler (42) is arranged in heat transfer communication with the sea water to transfer all unusable heat to the sea.

5. Method of operating a gas engine power plant (10) comprising operating at least one dual fuel internal combustion engine (12) by burning gas fuel,
storing the gas fuel in a cryogenic fuel storage (18) in liquefied form,
feeding gas to the at least one dual fuel internal combustion engine (12) via a fuel line (20) from the cryogenic fuel storage (18),
evaporating the liquefied gas for use by the at least one dual fuel internal combustion engine (12) by transferring heat in a main gas evaporator (24) in the fuel line (20),
transferring heat from the engine (12) to heat transfer fluid circulating in a heat transfer circuit (11) and transferring heat from the heat transfer fluid to at least a central cooler (42) of a central heat cooler system (40), **characterized by** transferring heat from the heat transfer fluid to the main gas evaporator (24) after the central fluid cooler system (40) and controlling the heat transfer in the central cooler (42) of the central cooling system (40) by leading a portion of the heat transfer fluid through a first by-pass channel (46) so as to maintain the temperature of the heat transfer fluid entering the main gas evaporator (24) at downstream side to the central cooler (42) within a predetermined range, wherein the heat transfer in the central cooling system (40) is controlled by a temperature of the heat transfer fluid measured at location after transferring heat from the heat transfer fluid to the main gas evaporator by means of a temperature probe (48) in connection with the heat transfer circuit at the downstream side of the central cooler (42).

6. Method of operating a power plant (10) according to claim 5, **characterized in that** a portion of the heat transfer fluid is arranged to continuously bypass the main gas evaporator (24).

7. Method of operating a power plant (10) according to claim 5, **characterized in that** the power plant provides power to a marine vessel (14) and the central cooler (42) is cooled by transferring heat to the sea water.

## Patentansprüche

1. Gasmotorenkraftwerk (10), umfassend:
zumindest einen Dualkraftstoffverbrennungsmotor (12), der zum Laufen durch Verbrennen von Gaskraftstoff konfiguriert ist,
einen kryogenen Kraftstoffspeicher (18) zum Speichern von Gaskraftstoff in verflüssigter Form zum Gebrauch des Motors (12),
eine Kraftstoffzufuhrleitung (20) zwischen dem kryogenen Kraftstoffspeicher (18) und dem zumindest einen Dualkraftstoffverbrennungsmotor (12),
einen Wärmeübertragungskreislauf (11), der zum Umwälzen von Wärmeübertragungsfluid im Kreislauf zum Übertragen von Wärme von dem zumindest einen Dualkraftstoffmotor (12) auf das Wärmeübertragungsfluid konfiguriert ist,
einen Hauptgasverdampfer (24), der an der Kraftstoffzufuhrleitung (20) und dem Wärmeübertragungskreislauf angeordnet ist und zum Verdampfen des verflüssigten Gases zum Gebrauch durch den zumindest einen Dualkraftstoffverbrennungsmotor (12) konfiguriert ist, und
ein zentrales Wärmeübertragungsfluid-Kühlersystem (40), das am Wärmeübertragungskreislauf (11) angeordnet ist, **dadurch gekennzeichnet, dass**
das zentrale Kühlersystem (40) einen zentralen Kühler (42) zum Kühlen des Wärmeübertragungsfluids und einen ersten Umgehungskanal (46), der am Wärmeübertragungskreislauf (11) angeordnet ist, und ein Strömungssteuerventil (44) umfasst, das zum Steuern der Strömung des Wärmeübertragungsfluids durch den ersten Umgehungskanal (46) und den zentralen Kühler (42) konfiguriert ist, und das zentrale Kühlersystem (40) ein Ventilaktuatorsystem (45) umfasst, das zum Betreiben des Strömungssteuerventils (44) angeordnet ist, und das Ventilaktuatorsystem (45) einen Temperaturfühler (48) in Verbindung mit dem Wärmeübertragungskreislauf auf der stromabwärtigen Seite des Hauptgasverdampfers (24) umfasst, wobei der Aktuator zum Arbeiten basierend auf Temperaturinformation, die vom Temperaturfühler (48) erhältlich ist, konfiguriert ist, und dass der Hauptgasverdampfer (24) in Wärmeübertragungsverbindung mit dem Wärmeübertragungskreislauf (11) nach dem zentralen Kühler (42) und dem ersten Umgehungskanal (46) des zentralen Kühlersystems (40) in der Strömungsrichtung des Wärmeübertragungsrichtung angeordnet ist, sodass Temperatur von Wärmeübertragungsfluid, das in den Hauptgasverdampfer (24) eintritt, durch den zentralen Kühler (42) und den ersten Umgehungskanal (46) des zentralen Kühlersystems (40) basierend auf Temperatur des Wärmeübertragungsfluids an einer nächsten Stelle nach dem Hauptgasverdampfer (24) in der Strömungsrichtung des Wärmeübertragungsfluids steuerbar ist.

2. Gasmotorenkraftwerk nach Anspruch 1, **dadurch gekennzeichnet, dass** der Kreislauf mit einem Kanal (50) versehen ist, der parallel zum Hauptgasverdampfer (24) verläuft und diesen umgeht.

3. Gasmotorenkraftwerk nach Anspruch 2, **dadurch gekennzeichnet, dass** der Kreislauf (11) mit einer Pumpe (52) versehen ist, die zwischen Verzweigungsstellen des Kanals (50) parallel zum Hauptgasverdampfer (24) angeordnet ist.

4. Gasmotorenkraftwerk nach Anspruch 1 in einem Wasserfahrzeug, **dadurch gekennzeichnet, dass** der zentrale Kühler (42) in Wärmeübertragungsverbindung mit dem Meerwasser angeordnet ist, um sämtliche unbrauchbare Wärme auf das Meer zu übertragen.

5. Verfahren zum Betreiben eines Gasmotorenkraftwerks (10), umfassend
Betreiben von zumindest einem Dualkraftstoffverbrennungsmotor (12) durch Verbrennen von Gaskraftstoff,
Speichern des Gaskraftstoffs in einem kryogenen Kraftstoffspeicher (18) in verflüssigter Form,
Zuführen von Gas zum zumindest einen Dualkraftstoffverbrennungsmotor (12) über eine Zufuhrleitung (20) vom kryogenen Kraftstoffspeicher (18),
Verdampfen des verflüssigten Gases zum Gebrauch durch den zumindest einen Dualkraftstoffverbrennungsmotor (12) durch Übertragen von Wärme in einem Hauptgasverdampfer (24) in der Kraftstoffleitung (20),
Übertragen von Wärme vom Motor (12) auf Wärmeübertragungsfluid, das in einem Wärmeübertragungskreislauf (11) zirkuliert, und Übertragen von Wärmeübertragungsfluid auf zumindest einen zentralen Kühler (42) eines zentralen Wärmekühlersystems (40), **gekennzeichnet, durch**
Übertragen von Wärme vom Wärmeübertragungsfluid auf den Hauptgasverdampfer (24) nach dem zentralen Fluidkühlersystem (40) und Steuern der Wärmeübertragung im zentralen Kühler (42) des zentralen Kühlsystems (40) durch Führen eines Anteils des Wärmeübertragungsfluids durch einen ersten Umgehungskanal (46), um die Temperatur des Wärmeübertragungsfluids, das in den Hauptgasverdampfer (24) auf der stromabwärtigen Seite zum zentralen Kühler (42) eintritt, innerhalb eines vorbestimmten Bereichs zu halten, wobei die Wärmeübertragung im zentralen Kühlsystem (40) durch eine Temperatur des Wärmeübertragungsfluids, die an einer Stelle nach dem Übertragen von Wärme vom Wärmeübertragungsfluid auf den Hauptgasverdampfer mittels eines Temperaturfühlers (48) in Verbindung mit dem Wärmeübertragungskreislauf auf der stromabwärtigen Seite des zentralen Kühlers (42) gemessen wird, gesteuert wird.

6. Verfahren zum Betreiben eines Kraftwerks (10) nach Anspruch 5, **dadurch gekennzeichnet, dass** ein Anteil des Wärmeübertragungsfluids zum fortlaufenden Umgehen des Hauptgasverdampfers (24) angeordnet ist.

7. Verfahren zum Betreiben eines Kraftwerks (10) nach Anspruch 5, **dadurch gekennzeichnet, dass** das Kraftwerk ein Wasserfahrzeug (14) mit Leistung versorgt und der zentrale Kühler (42) durch Übertragen von Wärme auf das Meerwasser gekühlt wird.

## Revendications

1. Centrale électrique à moteur à gaz (10) comprenant
au moins un moteur à combustion interne à bicombustible (12) configuré pour fonctionner en brûlant du gaz combustible,
un système de stockage de combustible cryogénique (18) pour stocker du gaz combustible sous forme liquéfiée destiné à une utilisation par le moteur (12),
une ligne d'alimentation en combustible (20) entre le système de stockage de combustible cryogénique (18) et l'au moins un moteur à combustion interne à bicombustible (12),
un circuit de transfert de chaleur (11) configuré pour faire circuler du fluide de transfert de chaleur dans le circuit pour transférer de la chaleur depuis l'au moins un moteur à combustion interne à bicombustible (12) vers le fluide de transfert de chaleur,
un évaporateur de gaz principal (24) disposé dans la ligne d'alimentation en combustible (20) et le circuit de transfert de chaleur et configuré pour faire évaporer le gaz liquéfié destiné à une utilisation par l'au moins un moteur à combustion interne à bicombustible (12), et
un système central refroidisseur de fluide de transfert de chaleur (40) disposé dans le circuit de transfert de chaleur (11), **caractérisé en ce que**
le système refroidisseur central (40) comprend un refroidisseur central (42) pour refroidir le fluide de transfert de chaleur et un premier canal de dérivation (46) disposé dans le circuit de transfert de chaleur (11), et une vanne de commande de flux (44) configurée pour contrôler le flux de fluide de transfert de chaleur à travers le premier canal de dérivation (46) et le refroidisseur central (42), et que le système refroidisseur central (40) comprend un système actionneur de vanne (45) conçu pour actionner la vanne de commande de flux (44), le système actionneur de vanne (45) comprenant une sonde de température (48) en connexion avec le circuit de transfert de chaleur du côté aval de l'évaporateur de gaz principal (24), l'actionneur étant configuré pour fonctionner en se basant sur une information de température pouvant être obtenue en provenance de la sonde de température (48), et que l'évaporateur de gaz principal (24) disposé en communication de transfert de chaleur avec le circuit de transfert de chaleur (11) en aval du refroidisseur central (42) et du premier canal de dérivation (46) du système refroidisseur central (40) dans le sens de flux du fluide de transfert de chaleur, de sorte que la température du fluide de transfert de chaleur entrant dans l'évaporateur de gaz principal (24) est contrôlable par le refroidisseur central (42) et le premier canal de dérivation (46) du système refroidisseur central (40) en se basant sur la température du fluide de transfert de chaleur à un emplacement situé juste en aval de l'évaporateur de gaz principal (24) dans le sens de flux de fluide de transfert de chaleur.

2. Centrale électrique à moteur à gaz selon la revendication 1, **caractérisé en ce que** le circuit est équipé d'un canal (50) parallèle à et contournant l'évaporateur de gaz principal (24).

3. Centrale électrique à moteur à gaz selon la revendication 2, **caractérisé en ce que** le circuit (11) est équipé d'une pompe (52) située entre des emplacements de dérivation du canal (50) parallèles à l'évaporateur de gaz principal (24).

4. Centrale électrique à moteur à gaz selon la revendication 1 dans un navire, **caractérisé en ce que** le refroidisseur central (42) est disposé en communication de transfert de chaleur avec l'eau de mer pour transférer une chaleur inutilisable à la mer.

5. Procédé de fonctionnement d'une centrale électrique à moteur à gaz (10) comprenant l'utilisation d'au moins un moteur à combustion interne à bicombustible (12) en brûlant du gaz combustible,
le stockage du gaz dans un système de stockage cryogénique (18) sous forme liquéfiée,
l'apport de gaz à l'au moins un moteur à combustion interne à bicombustible (12) par l'intermédiaire d'une ligne d'alimentation en combustible (20) en provenance du système de stockage cryogénique (18),
l'évaporation du gaz liquéfié destiné à une utilisation par l'au moins un moteur à combustion interne à bicombustible (12) transférant de la chaleur dans un évaporateur de gaz principal (24) dans la ligne de combustible (20),
le transfert de chaleur du moteur (12) à du fluide de transfert de chaleur dans un circuit de transfert de chaleur (11) et le transfert de chaleur du fluide de transfert de chaleur à au moins un refroidisseur central (42) d'un système central refroidisseur de chaleur (40), **caractérisé par**
le transfert de chaleur du fluide de transfert de chaleur à l'évaporateur de gaz principal (24) en aval du système central refroidisseur de fluide (40) et la commande du transfert de chaleur dans le refroidisseur central (42) du système refroidisseur central (40) en conduisant une partie du fluide de transfert de chaleur à travers un premier canal de dérivation (46) de manière à maintenir la température du fluide de transfert de chaleur entrant dans l'évaporateur de gaz principal (24) du côté aval du refroidisseur central (42) dans une plage prédéterminée, le transfert de chaleur dans le système refroidisseur central (40) étant contrôlé par une température du fluide de transfert de chaleur mesurée à un emplacement après le transfert de chaleur du fluide de transfert de chaleur à la valeur sur la chaise l'évaporateur de gaz principal au moyen d'une sonde de température (48) en connexion avec le circuit de transfert de chaleur du côté aval du refroidisseur central (42).

6. Procédé d'utilisation d'une centrale électrique (10) selon la revendication 5, **caractérisé en ce qu'**une partie du fluide de transfert de chaleur est conçue pour contourner en continu l'évaporateur de gaz principal (24).

7. Procédé d'utilisation d'une centrale électrique (10) selon la revendication 5, **caractérisé en ce que** la centrale électrique fournit du courant à un navire (14) et que le refroidisseur central (42) est refroidi en transférant de la chaleur à l'eau de mer.
